# EUROPEAN PATENT APPLICATION

(11) **EP 3 438 487 A1**
(43) Date of publication of application: **06.02.2019**
(21) Application number: 17774218.6
(22) Date of filing: 10.03.2017
(51) Int. Cl.: F16D 3/20, F16D 3/205

(54) **TRIPOD CONSTANT-VELOCITY UNIVERSAL JOINT AND METHOD FOR HEAT-TREATING TRIPOD MEMBER**

(30) Priority: 30.03.2016 JP 2016069034
(71) Applicant: NTN Corporation, Osaka-shi, Osaka 550-0003 (JP)
(72) Inventor: YAMAZAKI, Kisao, Iwata-shi Shizuoka 438-8510 (JP); WAKITA, Akira, Iwata-shi Shizuoka 438-8510 (JP); GOTOU, Yuushi, Iwata-shi Shizuoka 438-8510 (JP)
(74) Representative: Grünecker Patent- und Rechtsanwälte PartG mbB
(86) International application number: PCT/JP2017/009848
(87) International publication number: WO 2017/169674

(57) **Abstract**

The present invention relates to a tripod type constant velocity universal joint, including: an outer joint member (2, 52) having track grooves (6, 55) formed at trisected positions thereon in a circumferential direction of the tripod type constant velocity universal joint to extend in an axial direction of the tripod type constant velocity universal joint; a tripod member (3, 53) including: a trunnion barrel (8, 53a) spline-fitted to a shaft (20, 59) so as to allow torque transmission therebetween; and trunnion journals (9, 57) radially projecting from trisected positions on the trunnion barrel (8, 53a) in the circumferential direction; and rollers (4, 54) fitted to the trunnion journals (9, 57), respectively, the rollers (4, 54) being received in the track grooves (6, 55), respectively, each of the rollers (4, 54) being configured to be guided by roller guide surfaces (7, 56) formed on both side walls of each of the track grooves (6, 55), wherein the tripod member (3, 53) has quench-hardened layers (HI and H2) formed by carburizing, quenching, and tempering, and wherein a depth (D1) of a quench-hardened layer (H1) of a radially outer surface (10, 57a) of the trunnion journal is larger than a depth (D2) of a quench-hardened layer (H2) of a root portion (9a, 57b) of the trunnion journal (9, 57).

## Description

### TECHNICAL FIELD

The present invention relates to a plunging tripod type constant velocity universal joint to be used for power transmission in automobiles, industrial machines, and the like, and to a heat treatment method for a tripod member.

### BACKGROUND ART

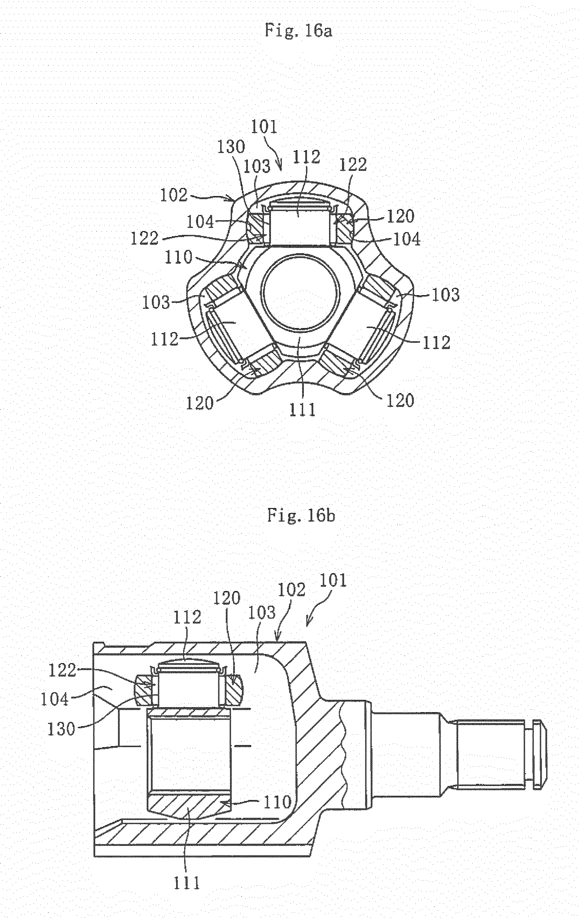

As illustrated in FIG. 16a and FIG. 16b, a tripod type constant velocity universal joint 101 includes an outer joint member 102, a tripod member 110, and spherical rollers 120. The outer joint member 102 has three track grooves 103 formed at trisected positions in a circumferential direction to extend in an axial direction. Roller guide surfaces 104 are formed on opposed side walls of each track groove 103. The tripod member 110 includes trunnion journals 112 radially projecting from trisected positions on a trunnion barrel 111 in the circumferential direction. The spherical rollers 120 are each fitted in a freely rotatable manner about each trunnion journal 112 through intermediation of a plurality of needle rollers 122. The spherical rollers 120 are received in the track grooves 103 of the outer joint member 102, respectively, and an outer spherical surface of each spherical roller 120 is guided by the roller guide surfaces 104 formed on both the side walls of each track groove 103 (see Patent Document 1).

### PRIOR ART DOCUMENTS

### PATENT DOCUMENTS

Patent Document 1: JP 3947342 B2

### SUMMARY OF THE INVENTION

### PROBLEMS TO BE SOLVED BY THE INVENTION

The tripod type constant velocity universal joint 101 described in Patent Document 1 attains reduction in weight and size by reducing an outer diameter of the outer joint member in consideration of strength and durability. In order to attain the reduction in weight and size, in this tripod type constant velocity universal joint 101, focus is given to a fact that an extra margin is secured for the durability in view of the balance between the strength and the durability, and dimension ratios are reviewed for the purpose of keeping the balance between the strength and durability.

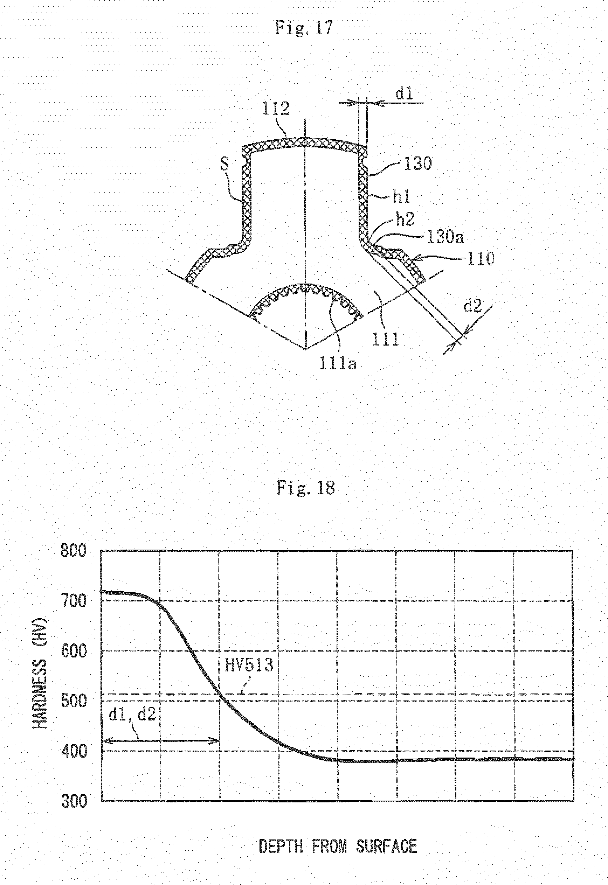

Heat treatment is performed on contact portions between components of the tripod type constant velocity universal joint 101 so as to secure the rolling life and the strength. The tripod member 110 is generally made of case hardening steel. As illustrated in FIG. 17, quench-hardened layers are required to be formed on the cylindrical radially outer surfaces 130 of the trunnion journals 112 serving as inner raceway surfaces for the needle rollers 122 (see FIG. 16a and FIG. 16b) and a spline 111a. Thus, the tripod member 110 is generally subjected to carburizing, quenching, and tempering, and substantially uniform hardened layers h1 and h2 are formed on an entire surface of the tripod member 110.

Hitherto, an effective hardened layer depth of the quench-hardened layer on the entire surface of the tripod member 110 is set to an effective hardened layer depth required for securing the rolling life of the cylindrical radially outer surfaces 130 of the trunnion journals 112 serving as the inner raceway surfaces for the needle rollers 122. For a finished product obtained after subjecting the cylindrical radially outer surface 130 of the trunnion journal 112 to grinding, the effective hardened layer depth of the tripod member 110 is from 0.6 mm to 1.0 mm at the cylindrical radially outer surface 130 of the trunnion journal 112 which has been subjected to the grinding, and is from 0.8 mm to 1.0 mm at a root portion 130a of the trunnion journal 112 which has not been subjected to the grinding.

The effective hardened layer depth is herein defined as a depth range having a minimum value obtained by multiplying a value of a maximum shear stress generating depth ZST, which is calculated based on a contact portion load and a contact ellipse of the cylindrical radially outer surface 130 of the trunnion journal 112 during application of high torque to the constant velocity universal joint, by a safety factor (1.5 times to 3 times). Further, the effective hardened layer depth generally has a range of Hv 513 (HRC 50) or more. The material hardness is from about Hv 300 to about Hv 390 (from about HRC 30 to about HRC 40).

In FIG. 18, there is shown a hardness distribution of the cylindrical radially outer surface 130 of the trunnion journal 112 of FIG. 17 from a surface to the inner portion. In FIG. 18, d1 and d2 represent effective hardened layer depths.

A quenching depth (quenching depth smaller than a depth of the cylindrical radially outer surface 130) capable of securing the strength is enough for portions excluding the cylindrical radially outer surfaces 130 of the trunnion journals 112.

In recent years, improvement for enhancing low-speed torque of an engine has been advanced, and the specifications adaptable to high torque are required also for a drive shaft for an automobile. Torque applied to the cylindrical radially outer surface 130 of the trunnion journal 112 serving as the raceway surface for the needle rollers 122 tends to be larger. In order to secure the deformation rigidity of the cylindrical radially outer surface 130, it is conceivable to set a quenching depth to be larger than the quenching depth that is set in the related art. However, the following problems have been found.

When the carburizing depth is set to be larger unreasonably, a probability for generating a carburizing abnormal layer (overcarburizing or the like) at the time of carburizing is increased, thus leading to reduction in strength. Moreover, advanced control for carburizing treatment is required, which becomes a factor of increasing costs. Further, when a quenching depth of portions excluding the cylindrical radially outer surface 130 of the trunnion journal 112, in particular, the root portion 130a of the trunnion journal 112 is set to be larger, fatigue strength tends to be reduced. Therefore, it is required to consider a balance between a carburizing quenching depth of the cylindrical radially outer surface 130 of the trunnion journal 112 and a carburizing quenching depth of other portions of the trunnion journal 112. It is found that the above-mentioned tendency becomes a bottleneck in design when the joint is desired to be reduced in size (size down) for weight reduction. The present invention has been made focusing on those problems.

The present invention has been made in view of the above-mentioned problem, and has an object to provide a tripod type constant velocity universal joint in which deformation rigidity and durability of trunnion journals are balanced, and a heat treatment method for a tripod member.

### SOLUTION TO THE PROBLEMS

Through various studies for achieving the above-mentioned object, the inventors of the present invention have conceived a novel idea of giving a balance with a large/small relationship between quenching depths of a radially outer surface and a root portion of the trunnion journal.

As a technical measure for achieving the above-mentioned object, according to one embodiment of the present invention, there is provided a tripod type constant velocity universal joint, comprising: an outer joint member having track grooves formed at trisected positions thereon in a circumferential direction of the tripod type constant velocity universal joint to extend in an axial direction of the tripod type constant velocity universal joint; a tripod member comprising: a trunnion barrel spline-fitted to a shaft so as to allow torque transmission therebetween; and trunnion journals radially projecting from trisected positions on the trunnion barrel in the circumferential direction; and rollers fitted to the trunnion journals, respectively, the rollers being received in the track grooves, respectively, each of the rollers being configured to be guided by roller guide surfaces formed on both side walls of each of the track grooves, wherein the tripod member has quench-hardened layers formed by carburizing, quenching, and tempering, and wherein a depth of a quench-hardened layer of a radially outer surface of the trunnion journal is larger than a depth of a quench-hardened layer of a root portion of the trunnion journal. With the above-mentioned configuration, it is possible to achieve the tripod type constant velocity universal joint in which the deformation rigidity and the durability of the trunnion journal are balanced, and which is adaptable to higher torque.

According to one embodiment of the present invention with regard to a heat treatment method for a tripod member of a tripod type constant velocity universal joint, the tripod type constant velocity universal joint comprises: an outer joint member having track grooves formed at trisected positions thereon in a circumferential direction of the tripod type constant velocity universal joint to extend in an axial direction of the tripod type constant velocity universal joint; a tripod member comprising: a trunnion barrel spline-fitted to a shaft so as to allow torque transmission therebetween; and trunnion journals radially projecting from trisected positions on the trunnion barrel in the circumferential direction; and rollers fitted to the trunnion journals, respectively, the rollers being received in the track grooves, respectively, each of the rollers being configured to be guided by roller guide surfaces formed on both side walls of each of the track grooves, wherein carburizing, quenching, and tempering are performed with use of a carburizing preventing jig configured to cover root portions of the trunnion journals. With the above-mentioned configuration, it is possible to achieve the heat treatment method capable of manufacturing, with high mass productivity, the tripod members of the tripod type constant velocity universal joints in which the deformation rigidity and the durability of the trunnion journal are balanced, and which are adaptable to higher torque, simplified in heat treatment control, and capable of reducing cost.

Now, the quench-hardened layer described in the claims and the description are defined as follows. As described above, first, the effective hardened layer depth is defined as a depth range having a minimum value obtained by multiplying a value of a maximum shear stress generating depth ZST, which is calculated based on a contact portion load and a contact ellipse of the radially outer surface of the trunnion journal during application of high torque to the constant velocity universal joint, by a safety factor (1.5 times to 3 times). The effective hardened layer depth is generally defined as a range of Hv 513 (HRC 50) or more. Further, the quench-hardened layer described in the claims and the description is defined as a hardened layer having the effective hardened layer depth defined as described above. The material hardness is from about Hv 300 to about Hv 390 (from about HRC 30 to about HRC 40).

The depth of the quench-hardened layer of the radially outer surface of the trunnion journal exceeds 1.0 mm. With this, the deformation rigidity of the trunnion journal against high torque can be increased.

The balance that enables the depth of the quench-hardened layer of the radially outer surface of the trunnion journal to be larger than the depth of the quench-hardened layer of the root portion of the trunnion journal is effective in both of a tripod type constant velocity universal joint of a single roller type in which the roller is fitted to the radially outer surface of the trunnion journal through intermediation of the rolling elements and a tripod type constant velocity universal joint of a double roller type in which roller units are fitted to the radially outer surface of the trunnion journal.

The carburizing, quenching, and tempering are performed twice. With this, the balance that enables the depth of the quench-hardened layer of the radially outer surface of the trunnion journal to be larger than the depth of the quench-hardened layer of the root portion of the trunnion journal can be secured stably.

### EFFECTS OF THE INVENTION

According to the present invention, there can be achieved the tripod type constant velocity universal joint in which the deformation rigidity and the durability of the trunnion journal are balanced, and which is adaptable to higher torque. Moreover, according to the present invention, it is possible to achieve the heat treatment method capable of manufacturing, with high mass productivity, the tripod members of the tripod type constant velocity universal joints in which the deformation rigidity and the durability of the trunnion journal are balanced, and which are adaptable to higher torque, simplified in heat treatment control, and capable of reducing cost.

### BRIEF DESCRIPTION OF DRAWINGS

FIG. 1a is a transverse sectional view of a tripod type constant velocity universal joint according to a first embodiment of the present invention.
FIG. 1b is a longitudinal sectional view of the tripod type constant velocity universal joint according to the first embodiment of the present invention.
FIG. 2 is a partial transverse sectional view for illustrating a quench-hardened layer of a tripod member of FIGS. 1.
FIG. 3 is a sectional view for illustrating a quench-hardened layer of a root portion of a trunnion journal as viewed in a direction indicated by the arrows of the line A-A of FIG. 2.
FIG. 4 is a graph for showing hardness distributions of a radially outer surface of the trunnion journal and the root portion from a surface to an inner portion.
FIG. 5 is a transverse sectional view for illustrating a carburizing preventing jig for the tripod member as viewed in a direction indicated by the arrows of the line B-B of FIG. 6.
FIG. 6 is a side view for illustrating a state in which tripod members are stacked in the carburizing preventing jig.
FIG. 7 is a schematic view for illustrating a condition of carburizing treatment.
FIG. 8 is a sectional view for illustrating a modification example of the quench-hardened layer of the root portion of the trunnion journal as viewed in the direction indicated by the arrows of the line A-A of FIG. 2.
FIG. 9 is a longitudinal sectional view for illustrating a tripod type constant velocity universal joint according to a second embodiment of the present invention.
FIG. 10 is a side view including a partial cross section as viewed in a direction indicated by the arrows of the line K-K of FIG. 9.
FIG. 11 is a sectional view as viewed in a direction indicated by the arrows of the line L-L of FIG. 9.
FIG. 12 is a longitudinal sectional view for illustrating a state in which the tripod type constant velocity universal joint of FIG. 9 forms an operating angle.
FIG. 13 is a partial transverse sectional view for illustrating a quench-hardened layer of a tripod member of FIG. 9.
FIG. 14a is a sectional view for illustrating a quench-hardened layer of a root portion of a trunnion journal as viewed in a direction indicated by the arrows of the line A-A of FIG. 13.
FIG. 14b is a sectional view for illustrating a modification example of the quench-hardened layer of the root portion of the trunnion journal as viewed in the direction indicated by the arrows of the line A-A of FIG. 13.
FIG. 15 is a transverse sectional view for illustrating a carburizing preventing jig for the tripod member of FIG. 9.
FIG. 16a is a transverse sectional view of a related-art tripod type constant velocity universal joint.
FIG. 16b is a longitudinal sectional view of the related-art tripod type constant velocity universal joint.
FIG. 17 is a transverse sectional view for illustrating a quench-hardened layer of a tripod member of FIG. 16a.
FIG. 18 is a graph for showing a hardness distribution of a cylindrical radially outer surface of a trunnion journal of FIG. 17 from a surface to an inner portion.

### EMBODIMENTS OF THE INVENTION

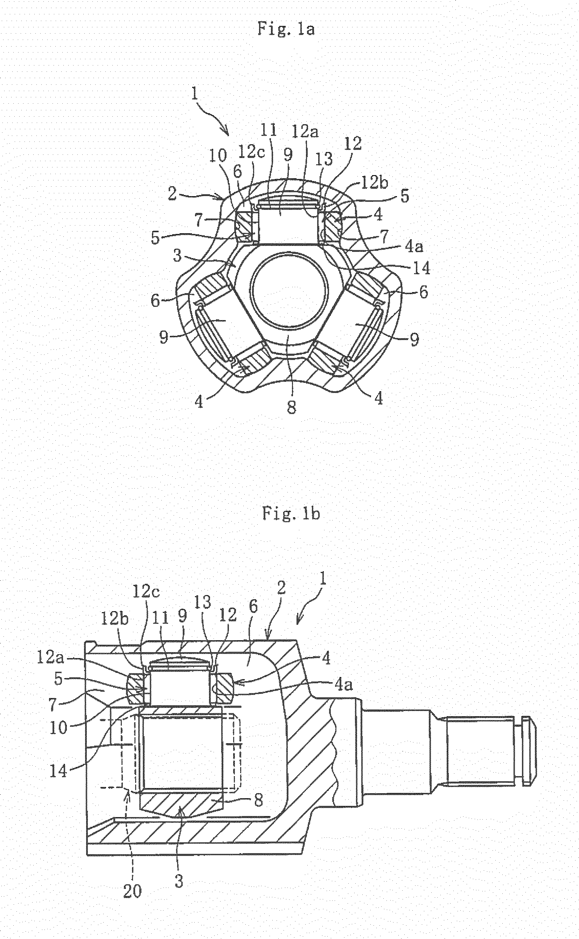

A tripod type constant velocity universal joint according to a first embodiment of the present invention is described with reference to FIGS. 1 to FIG. 4.

FIG. 1a is a transverse sectional view of the tripod type constant velocity universal joint according to the first embodiment. FIG. 1b is a longitudinal sectional view of the tripod type constant velocity universal joint according to the first embodiment. As illustrated in FIG. 1a and FIG. 1b, a tripod type constant velocity universal joint 1 mainly comprises an outer joint member 2, a tripod member 3 serving as an inner joint member, spherical rollers 4, and needle rollers 5 serving as rolling elements. The outer joint member 2 has a hollow cup shape with three track grooves 6 formed on an inner periphery thereof at trisected positions in a circumferential direction to extend in an axial direction. Roller guide surfaces 7 are formed on opposed side walls of each track groove 6. The roller guide surfaces 7 are formed as parts of a cylindrical surface, that is, as partial cylindrical surfaces.

The tripod member 3 comprises a trunnion barrel 8 and trunnion journals 9. Three trunnion journals 9 are formed to radially project from trisected positions on the trunnion barrel 8 in the circumferential direction. The trunnion barrel 8 is spline-fitted to a shaft 20 so as to allow torque transmission therebetween. Each trunnion journal 9 has a cylindrical radially outer surface 10 and an annular retaining ring groove 11 formed in the vicinity of a shaft end of the trunnion journal 9. The spherical roller 4 is fitted in a freely rotatable manner about the cylindrical radially outer surface 10 of the trunnion journal 9 through intermediation of the plurality of needle rollers 5. The cylindrical radially outer surface 10 of the trunnion journal 9 serves as an inner raceway surface for the needle rollers 5. A radially inner surface 4a of the spherical roller 4 has a cylindrical shape and serves as an outer raceway surface for the needle rollers 5.

In the retaining ring groove 11 formed in the vicinity of the shaft end of the trunnion journal 9, a retaining ring 13 is fitted through intermediation of an outer washer 12. Movement of the needle rollers 5 in an axial line direction of the trunnion journal 9 is restricted by an inner washer 14 and the outer washer 12. The outer washer 12 comprises a disc portion 12a and a cylindrical portion 12b. The disc portion 12a extends in a radial direction of the trunnion journal 9. The cylindrical portion 12b extends in the axial line direction of the trunnion journal 9. The cylindrical portion 12b of the outer washer 12 has an outer diameter that is smaller than a diameter of the radially inner surface 4a of the spherical roller 4, and an end portion 12c of the cylindrical portion 12b, which is located on an outer side when viewed in a radial direction of the tripod member 3, is formed to have a diameter that is larger than that of the radially inner surface 4a of the spherical roller 4. Thus, the spherical roller 4 is movable in the axial line direction of the trunnion journal 9, and is prevented from dropping off by the end portion 12c.

The spherical roller 4 fitted to the trunnion journal 9 of the tripod member 3 in a freely rotatable manner is guided by the roller guide surfaces 7 of the track groove 6 of the outer joint member 2 in a freely rotatable manner. With this structure, relative axial displacement and relative angular displacement between the outer joint member 2 and the tripod member 3 are absorbed so that the rotation is transmitted at constant velocity.

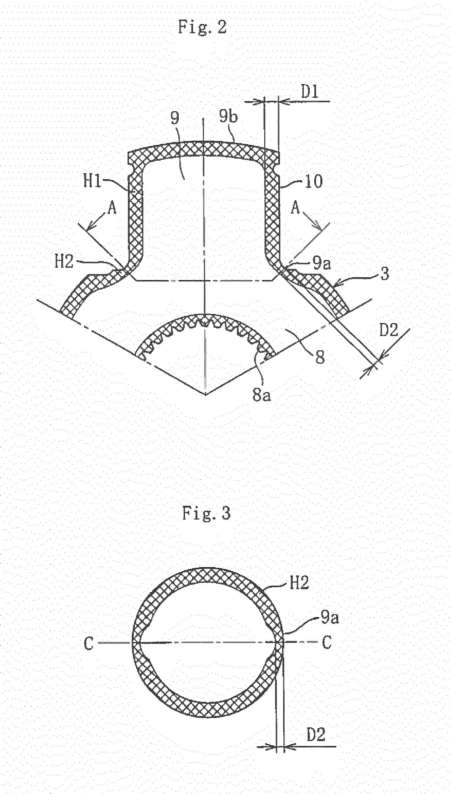

FIG. 2 is a view for illustrating a quench-hardened layer of the tripod member 3, and is an illustration of a one-third portion of the transverse section of FIG. 1a. The remaining two-third portion which is omitted from illustration is also the same (the same applies to subsequent drawings.). A spline 8a is formed along an inner periphery of the trunnion barrel 8. The quench-hardened layer having been subjected to carburizing, quenching, and tempering is formed on the entire surface of the tripod member 3. The quench-hardened layer is indicated by cross-hatching in a range of an effective hardened layer depth. The same applies to subsequent drawings.

The tripod member 3 is made of case hardening steel such as chromium steel (for example, SCr420) or chromium-molybdenum steel (for example, SCM420). A characteristic configuration of the tripod member 3 of the first embodiment resides in that the depth of the quench-hardened layer is varied so as to have a large/small relationship between the cylindrical radially outer surface 10 and a root portion 9a of the trunnion journal 9. As illustrated in FIG. 2, a quench-hardened layer H1 of the cylindrical radially outer surface 10 is formed to be larger in depth than a quench-hardened layer H2 of the root portion 9a. The quench-hardened layer H1 of the cylindrical radially outer surface 10 is formed to have a substantially uniform depth with portions excluding the root portion 9a, that is, with the trunnion barrel 8, the spline 8a, a distal end surface 9b of the trunnion journal 9 in the radial direction. In the tripod member 3 being a finished product, the cylindrical radially outer surface 10 is finished by grinding, quenched steel cutting work, or the like, and hence the quench-hardened layer H1 of the cylindrical radially outer surface 10 is smaller in depth than quench-hardened layers of the trunnion barrel 8, the spline 8a, and the distal end surface 9b by an amount corresponding to a machining allowance for grinding (about 0.1 mm).

Specifically, a depth D1 of the quench-hardened layer H1 of the cylindrical radially outer surface 10 is larger than a depth d1 (0.6 mm to 1.0 mm) of a quench-hardened layer h1 of a cylindrical radially outer surface 130 in the related art illustrated in FIG. 17, and is set to a depth exceeding 1.0 mm. Meanwhile, a depth D2 of the quench-hardened layer H2 of the root portion 9a is set to be equal to or smaller than a depth d2 (0.8 mm to 1.0 mm) of a quench-hardened layer h2 of a root portion 130a in the related art.

As illustrated in FIG. 3 being a sectional view of the root portion as viewed in a direction indicated by the arrows of the line A-A of FIG. 2, a portion at which the depth D2 of the quench-hardened layer H2 of the root portion 9a is set smaller is formed only in a torque applying direction of the line C-C. This is attributed to a carburizing preventing jig to be used in a heat treatment method according to an embodiment of the present invention described later. The details thereof are described later. When at least the depth D2 of the quench-hardened layer H2 of the root portion 9a is smaller in the torque applying direction as described above, fatigue strength of the root portion 9a can be secured. This is because, even when the quench-hardened layer H2 of the root portion 9a becomes larger in depth, a range excluding the portion in the torque applying direction of the line C-C does not become an originating point of a fatigue failure.

When the depth D2 of the quench-hardened layer H2 of the root portion 9a is set to be equal to or smaller than the depth d2 of the quench-hardened layer h2 of the root portion 130a in the related art (see FIG. 17) while the depth D1 of the quench-hardened layer H1 of the cylindrical radially outer surface 10 of the trunnion journal 9 is set to be larger, enhancement in deformation rigidity of the cylindrical radially outer surface 10 of the trunnion journal 9 (adaptable to a large contact pressure) and durability of the root portion 9a (fatigue strength) can be balanced.

When the depth D1 of the quench-hardened layer H1 of the cylindrical radially outer surface 10 of the trunnion journal 9 is set to be larger, a probability for generating a carburizing abnormal layer on the surface is increased. However, when the cylindrical radially outer surface 10 is subjected to post-processing (such as grinding or quenched steel cutting work) after heat treatment, the carburizing abnormal layer is eliminated, and an influence of the carburizing abnormal layer is eliminated. Meanwhile, the depth D2 of the quench-hardened layer H2 of the root portion 9a is set to be smaller, and hence the carburizing abnormal layer is less liable to be generated. As a result, carburizing, quenching, and tempering can be easily controlled, thus leading to cost reduction. With this, the deformation rigidity and the durability of the trunnion journal 9 are balanced, and thus, the tripod type constant velocity universal joint according to the first embodiment is adaptable to higher torque.

Now, supplementary description is given of the carburizing abnormal layer. When carburizing steel such as the SCM420 material or the SCr420 material being the material of the tripod member 3 of the first embodiment is subjected to carburizing, quenching, and tempering, flexible tissue which is called "carburizing abnormal layer" is formed on the surface layer portion. The carburizing abnormal layer is formed of grain boundary oxide that is formed in such a manner that alloying elements such as silicon (Si), manganese (Mn), and chromium (Cr), which are easily oxidized than iron in steel, are priority-oxidized by an austenite grain boundary during carburizing, and an imperfect quenched layer, which is generated in such a manner that the solid alloying element is lowered due to the generation of the grain boundary oxide during quenching. Such layer is referred to as "carburizing abnormal layer" in the description.

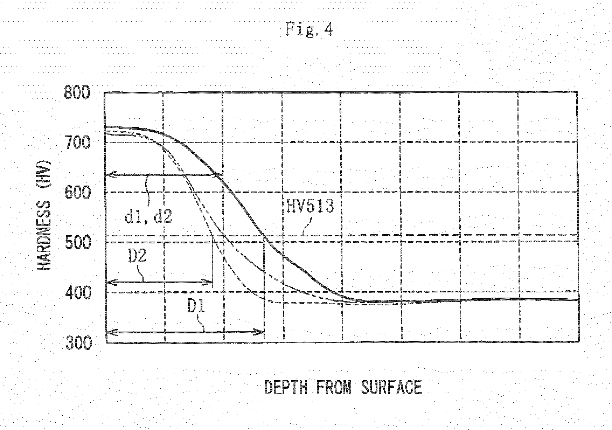

In FIG. 4, there is shown hardness distributions of the cylindrical radially outer surface 10 and the root portion 9a of the trunnion journal 9 from the surface to the inner portion. In FIG. 4, the solid line indicates a hardness distribution of a portion corresponding to the cylindrical radially outer surface 10, and the dotted line indicates a hardness distribution of a portion corresponding to the root portion 9a. A hardness distribution of the cylindrical radially outer surface 130 and the root portion 130a, which is indicated by the solid line in FIG. 18, is added in FIG. 4 as the long dashed double-short dashed line. As illustrated in FIG. 4, the depth D1 of the quench-hardened layer H1 of the cylindrical radially outer surface 10 of the trunnion journal 9 in the first embodiment is larger than the depth d1 of the quench-hardened layer h1 of the cylindrical radially outer surface 130 in the related art (see FIG. 17), and the depth D2 of the quench-hardened layer H2 of the root portion 9a is set to be equal to or smaller than the depth d2 of the quench-hardened layer H2 of the root portion 130a in the related art (see FIG. 17).

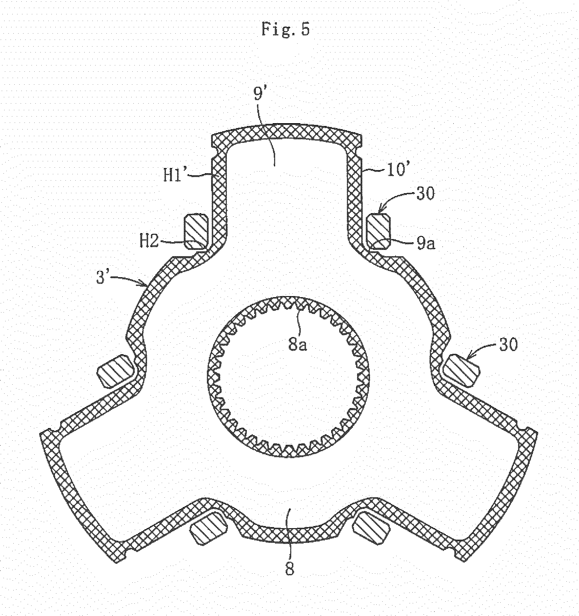

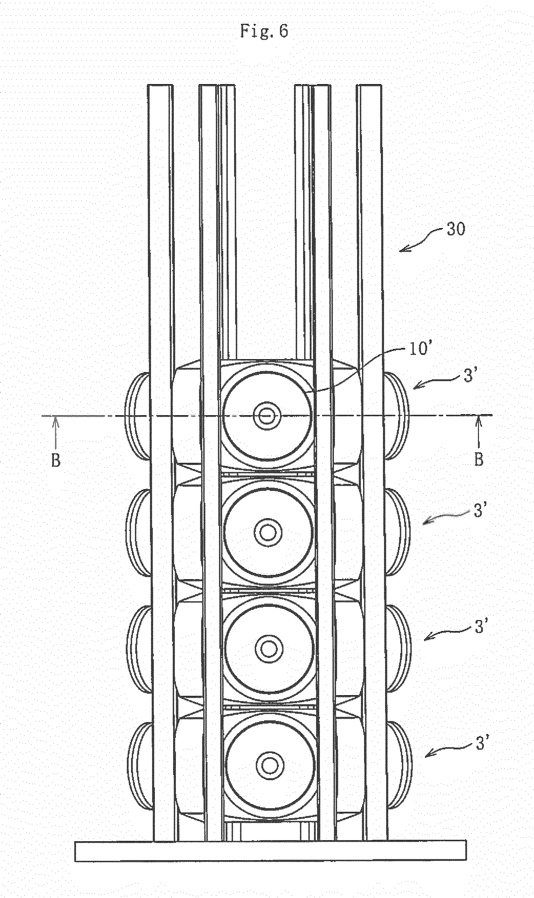

Next, a heat treatment method for a tripod member according to an embodiment of the present invention is described with reference to FIG. 5 to FIG. 7. FIG. 5 is a transverse sectional view of the carburizing preventing jig for the tripod member as viewed in a direction indicated by the arrows of the line B-B of FIG. 6. FIG. 6 is a side view for illustrating a state in which a large number of tripod members are stacked in the carburizing preventing jig. When carburizing treatment as heat treatment is performed, in order to reduce a depth of a quench-hardened layer H2 of a root portion 9a of a trunnion journal 9' of the turning-completed product 3' of the tripod member, carburizing is prevented. In order to prevent carburizing locally at the root portion 9a, as illustrated in FIG. 5, when a product to be treated (turning-completed product 3' of the tripod member) is to be loaded in a carburizing furnace, a carburizing preventing jig 30 configured to cover the root portions 9a is installed to prevent entry of carbon. In this manner, the quench-hardened layer H2 reduced in depth can be obtained. In this embodiment, the carburizing preventing jig 30 is arranged to be closest to the root portions 9a in the torque applying direction. Therefore, as illustrated in FIG. 3, in the torque applying direction of the line C-C, the depth D2 of the quench-hardened layer H2 of the root portion 9a is small.

As illustrated in FIG. 6, a large number of turning-completed products 3' of the tripod member are stacked, and placed in the carburizing preventing jig 30. The carburizing preventing jig 30 in a state in which the large number of turning-completed products 3' are placed is fixed to a flat net (not shown), and is subjected to carburizing, quenching, and tempering. It is preferred that the carburizing preventing jig 30 be made of heat resistant stainless steel. When the carburizing preventing jig 30 as illustrated in FIG. 6 is used, the large number of turning-completed products 3' of tripod members can be subjected to carburizing treatment with a single carburizing preventing jig 30, thereby being capable of ensuring mass productivity.

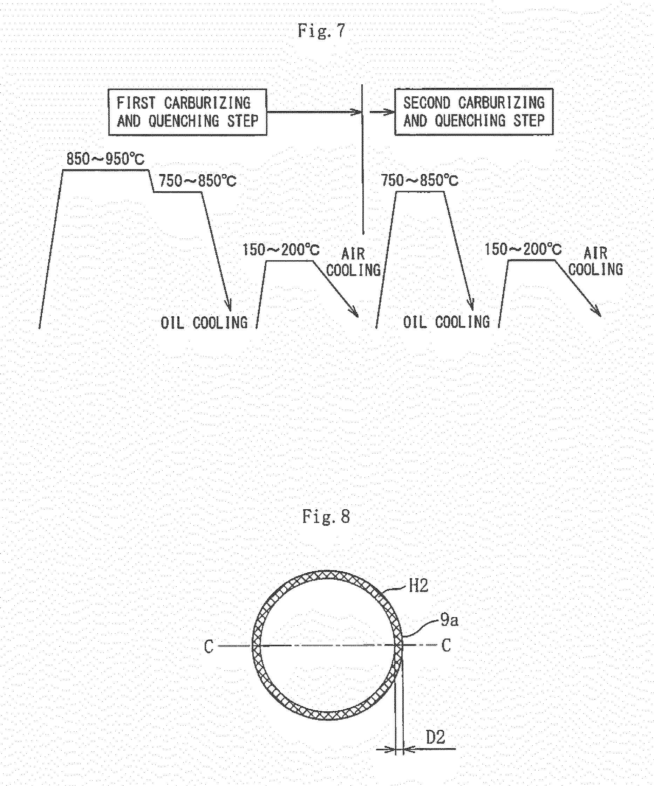

The conditions of carburizing treatment are as follows. As illustrated in FIG. 7, as first quenching, carburizing/diffusion is performed at 850°C to 950°C for 180 minutes to 200 minutes. After the carburizing/diffusion, products are heated and held at 750°C to 850°C. Then, the products are subjected to oil quenching. It is preferred that the tempering be performed under a condition at 150°C to 200°C for 120 minutes. Next, as second quenching, the products are heated and held at 750°C to 850°C, and are subjected to oil quenching, and further, to tempering. The treatment conditions are suitably changed depending on a size and the like of the products to be treated.

With regard to the use of the carburizing preventing jig 30, the carburizing preventing jig 30 may be used for the second quenching after general carburizing, quenching, and tempering are performed as the first quenching. Further, conversely, the carburizing preventing jig 30 may be used for the first quenching, and general carburizing, quenching, and tempering may be performed as the second quenching. In both the cases of the second carburizing,quenching, and tempering, while the depth D1 of the quench-hardened layer H1 of the cylindrical radially outer surface 10 of the trunnion journal 9 is secured to be larger, the depth D2 of the quench-hardened layer H2 of the root portion 9a can be reduced.

FIG. 8 is an illustration of a modification example of the quench-hardened layer of the root portion of the trunnion journal. Similarly to FIG. 3, FIG. 8 is a sectional view as viewed in the direction indicated by the arrows of the line A-A of FIG. 2. In this modification example, the quench-hardened layer H2 is set to be smaller in depth over the entire periphery of the root portion 9a. In such a case, it is only required that a shape and a structure of the carburizing preventing jig 30 be suitably changed so as to cover the entire periphery of the root portion 9a. A quench-hardened layer on the surface excluding the root portion 9a is the same as that of FIG. 2.

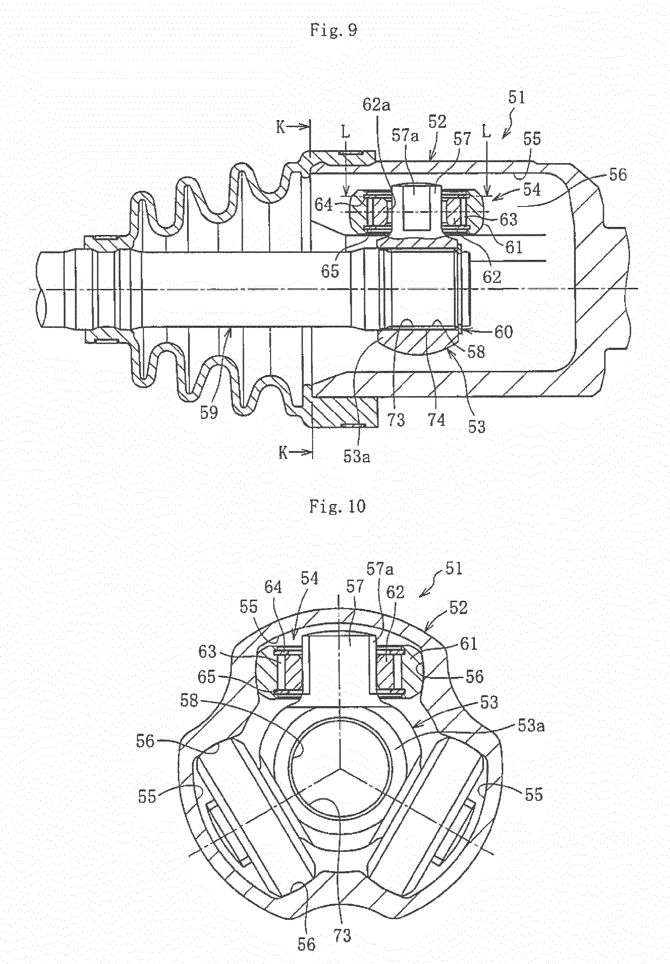

Next, a tripod type constant velocity universal joint according to a second embodiment of the present invention is described with reference to FIG. 9 to FIGS. 14. FIG. 9 is a longitudinal sectional view of a tripod type constant velocity universal joint of a double roller type. FIG. 10 is a side view including a partial cross section as viewed in a direction indicated by the arrows of the line K-K of FIG. 9, and is an illustration of a cross section of only one roller unit. As illustrated in FIG. 9 and FIG. 10, a tripod type constant velocity universal joint 51 mainly comprises an outer joint member 52, a tripod member 53 serving as an inner joint member, and roller units 54 serving as torque transmitting members. The outer joint member 52 has a cup shape that is opened at one end, and has an inner peripheral surface having three linear track grooves 55 equiangularly formed therein to extend in an axial direction. On both sides of each of the track grooves 55, there are formed roller guide surfaces 56 being arranged to face each other in a circumferential direction and each extending in the axial direction. The outer joint member 52 receives therein the tripod member 53 and the roller units 54.

The tripod member 53 comprises three trunnion journals 57 radially projecting from a trunnion barrel 53a. A male spline 74 formed on a shaft 59 is fitted to a female spline 73 formed in a center hole 58 of the tripod member 53, and the shaft 59 is fixed with a stopper ring 60 in the axial direction. The roller units 54 each mainly comprise an outer ring 61 serving as a roller, an inner ring 62 arranged inside the outer ring 61 and externally fitted to the trunnion journal 57, and a large number of needle rollers 63 interposed between the outer ring 61 and the inner ring 62. The roller units 54 are received in the track grooves 55 of the outer joint member 52. A radially inner surface 62a (see FIG. 9) of the inner ring 62 exhibits an arc-shaped protruding surface in longitudinal section including an axial line of the inner ring 62. The roller unit 54 comprising the inner ring 62, the needle rollers 63, and the outer ring 61 has a structure in which washers 64 and 65 prevent separation of the components.

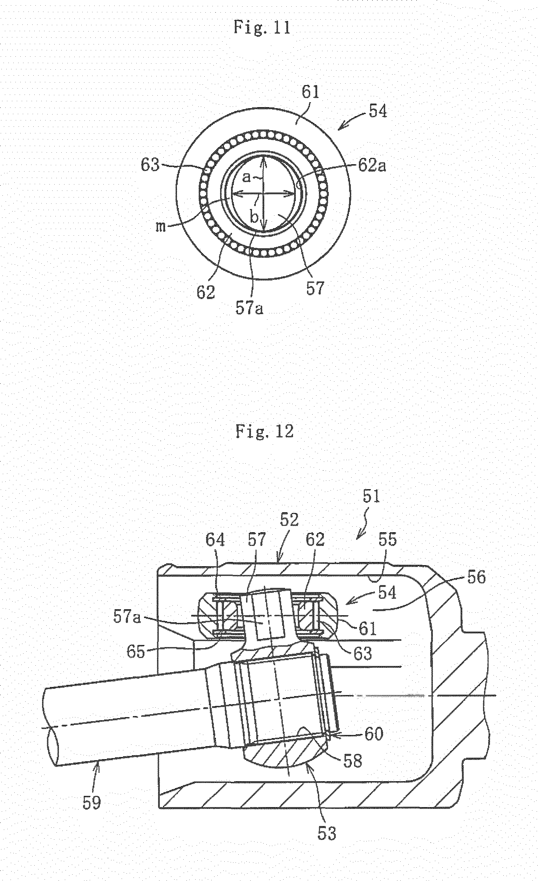

A radially outer surface 57a of each of the trunnion journals 57 of the tripod member 53 has a straight shape in longitudinal section including an axial line of the trunnion journal 57. Further, as illustrated in FIG. 11 being a sectional view as viewed in a direction indicated by the arrows of the line L-L of FIG. 9, the radially outer surface 57a of the trunnion journal 57 has a substantially elliptical shape in transverse section that is orthogonal to the axial line of the trunnion journal 57, and is held in contact with the radially inner surface 62a of the inner ring 62 in a direction that is orthogonal to the joint axial line, that is, a direction of the major axis "a". Gaps "m" are formed between the radially outer surface 57a of the trunnion journal 57 and the radially inner surface 62a of the inner ring 62 in a direction of the joint axial line, that is, a direction of the minor axis "b". In FIG. 11, for easy understanding of the drawings, hatching on the outer ring 61 and the trunnion journal 57 is omitted.

In the tripod type constant velocity universal joint 51, the outer ring 61 of the roller unit 54 mounted to the trunnion journal 57 of the tripod member 53 rolls on the roller guide surfaces 56 of each of the track grooves 55 of the outer joint member 52 (see FIG. 9 and FIG. 10). The trunnion journal 57 has a substantially elliptical shape in transverse section. Thus, as illustrated in FIG. 12, when the tripod type constant velocity universal joint 51 forms an operating angle, an axial line of the tripod member 53 is inclined with respect to an axial line of the outer joint member 52. Meanwhile, the roller unit 54 is capable of being inclined with respect to the axial line of the trunnion journal 57 of the tripod member 53. Thus, the outer ring 61 of the roller unit 54 and the roller guide surfaces 56 can be prevented from obliquely crossing each other. Accordingly, the roller unit 54 properly rolls. Thus, inductive thrust and sliding resistance can be reduced, thereby being capable of reducing vibration of the joint.

In particular, in the tripod type constant velocity universal joint 51, the radially outer surface 57a of the trunnion journal 57 has a substantially elliptical shape in transverse section, and the radially inner surface 62a (see FIG. 11) of the inner ring 62 has an arc-shaped protruding surface in longitudinal section including the axial line of the inner ring 62. Thus, the radially outer surface 57a of the trunnion journal 57 and the radially inner surface 62a of the inner ring 62 are held in contact with each other in a small area, that is, substantially in a point-contact state. Therefore, friction resistance is extremely small in the inclination motion of the roller unit 54 and the trunnion journal 57, and, further, the radially outer surface 57a of the trunnion journal 57 and the radially inner surface 62a of the inner ring 62 roll and swing with respect to minor extension and retraction motions. Thus, an effect of conspicuous reduction in vibration of the joint is obtained. However, the contact area of the contact portion between the radially outer surface 57a of the trunnion journal 57 and the radially inner surface 62a of the inner ring 62 is small. Therefore, it is required to take a countermeasure against increase in contact pressure at the contact portion during application of high load.

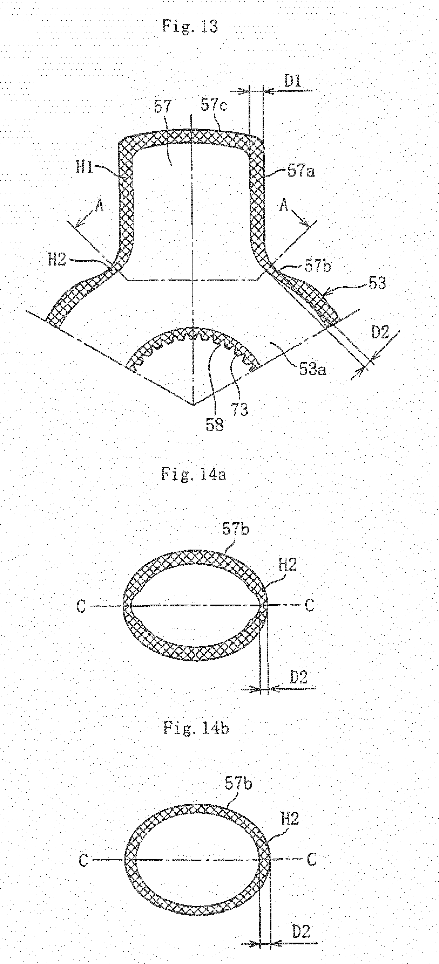

FIG. 13 is a view for illustrating a quench-hardened layer of the tripod member 53, and is an illustration of a one-third portion of the transverse section of FIG. 10. A female spline 73 is formed along a center hole 58 of the trunnion barrel 53a. The quench-hardened layer having been subjected to carburizing, quenching, and tempering is formed on the entire surface of the tripod member 53.

Also in this embodiment, the tripod member 53 is made of case hardening steel such as chromium steel (for example, SCr420) or chromium-molybdenum steel (for example, SCM420). As illustrated in FIG. 13, a quench-hardened layer H1 of the radially outer surface 57a of the trunnion journal 57 is formed to be lager in depth than a quench-hardened layer H2 of a root portion 57b. The quench-hardened layer H1 of the radially outer surface 57a is formed to have a substantially uniform depth with portions excluding the root portion 57b, that is, with the trunnion barrel 53a, the spline 73, a distal end surface 57c of the trunnion journal 57 in the radial direction. In the tripod member 53 being a finished product, the radially outer surface 57a is finished by grinding, quenched steel cutting work, or the like, and hence the quench-hardened layer H1 of the radially outer surface 57a is smaller in depth than quench-hardened layers of the trunnion barrel 53a, the spline 73, and the distal end surface 57c by an amount corresponding to a machining allowance for grinding (about 0.1 mm).

FIGS. 14 are each a sectional view of the root portion as viewed in a direction indicated by the arrows of the line A-A of FIG. 13. In FIG. 14a, a depth D2 of the quench-hardened layer H2 of the root portion 57b is set to be smaller only at a portion in the torque applying direction of the line C-C. In FIG. 14b, the quench-hardened layer H2 is set to be smaller over an entire periphery of the root portion 57b.

Also in this embodiment, when the depth D2 of the quench-hardened layer H2 of the root portion 57b is set to be equal to or smaller than the depth d2 of the quench-hardened layer h2 of the root portion 130a in the related art while the depth D1 of the quench-hardened layer H1 of the radially outer surface 57a of the trunnion journal 57 is set to be larger, enhancement in deformation rigidity of the radially outer surface 57a of the trunnion journal 57 (adaptable to a large contact pressure) and durability of the root portion 57b (fatigue strength) can be balanced, and thus, the tripod type constant velocity universal joint according to the first embodiment is adaptable to higher torque.

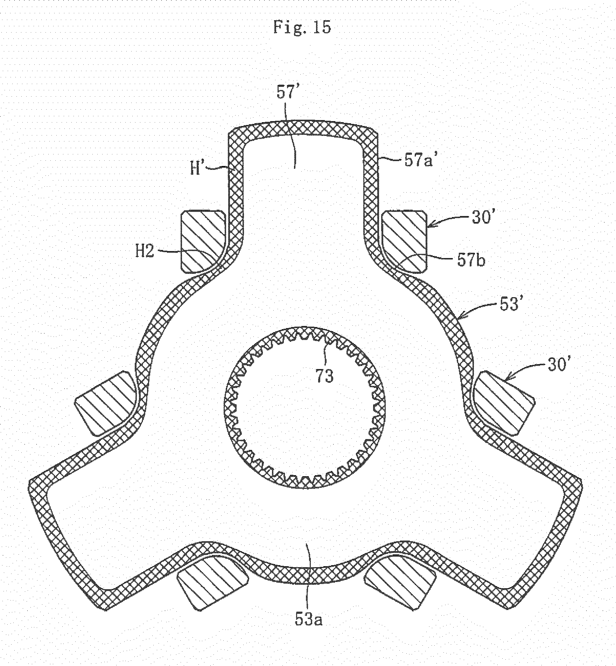

FIG. 15 is an illustration of a carburizing preventing jig 30' configured to prevent carburizing at the root portion 57b of the trunnion journal 57' of the turning-completed product 53' of the tripod member. An installation manner of the turning-completed product 53' to the carburizing preventing jig 30', heat treatment, and a hardness distribution of the quench-hardened layer are the same as those of the first embodiment. Thus, the details described in the first embodiment are similarly applied, and description thereof is omitted.

The present invention is not limited to the above-mentioned embodiments. As a matter of course, the present invention may be carried out in various modes without departing from the spirit of the present invention. The scope of the present invention is defined in claims, and encompasses equivalents described in claims and all changes within the scope of claims.

### DESCRIPTION OF REFERENCE SIGNS

- 1, 51: tripod type constant velocity universal joint
- 2, 52: outer joint member
- 3, 53: tripod member
- 4: spherical roller
- 5: needle roller
- 6: track groove
- 7: roller guide surface
- 8: trunnion barrel
- 9: trunnion journal
- 9a: root portion
- 10: cylindrical radially outer surface
- 20: shaft
- 30, 30': carburizing preventing jig
- 53a: trunnion barrel
- 54: roller unit
- 55: track groove
- 56: roller guide surface
- 57: trunnion journal
- 57a: radially outer surface
- 57b: root portion
- 59: shaft
- 61: outer ring
- 62: inner ring
- 63: needle roller
- H1, H2: quench-hardened layer
- D1, D2: effective hardened layer depth

## Claims

1. A tripod type constant velocity universal joint, comprising:
an outer joint member having track grooves formed at trisected positions thereon in a circumferential direction of the tripod type constant velocity universal joint to extend in an axial direction of the tripod type constant velocity universal joint;
a tripod member comprising:
a trunnion barrel spline-fitted to a shaft so as to allow torque transmission therebetween; and
trunnion journals radially projecting from trisected positions on the trunnion barrel in the circumferential direction; and
rollers fitted to the trunnion journals, respectively,
the rollers being received in the track grooves, respectively,
each of the rollers being configured to be guided by roller guide surfaces formed on both side walls of each of the track grooves,
wherein the tripod member has quench-hardened layers formed by carburizing, quenching, and tempering, and
wherein a depth of a quench-hardened layer of a radially outer surface of the trunnion journal is larger than a depth of a quench-hardened layer of a root portion of the trunnion journal.

2. The tripod type constant velocity universal joint according to claim 1, wherein the depth of the quench-hardened layer of the radially outer surface of the trunnion journal exceeds 1.0 mm.

3. The tripod type constant velocity universal joint according to claim 1 or 2, wherein the tripod type constant velocity universal joint is a single roller type in which the roller is mounted to the radially outer surface of the trunnion journal through intermediation of rolling elements.

4. The tripod type constant velocity universal joint according to claim 1 or 2, wherein the tripod type constant velocity universal joint is a double roller type in which roller units are mounted to the radially outer surfaces of the trunnion journals.

5. A heat treatment method for a tripod member of a tripod type constant velocity universal joint,
the tripod type constant velocity universal joint comprising:
an outer joint member having track grooves formed at trisected positions thereon in a circumferential direction of the tripod type constant velocity universal joint to extend in an axial direction of the tripod type constant velocity universal joint;
a tripod member comprising:
a trunnion barrel spline-fitted to a shaft so as to allow torque transmission therebetween; and
trunnion journals radially projecting from trisected positions on the trunnion barrel in the circumferential direction; and
rollers fitted to the trunnion journals, respectively,
the rollers being received in the track grooves, respectively,
each of the rollers being configured to be guided by roller guide surfaces formed on both side walls of each of the track grooves,
wherein carburizing, quenching, and tempering are performed with use of a carburizing preventing jig configured to cover root portions of the trunnion journals.

6. The heat treatment method for a tripod member of a tripod type constant velocity universal joint according to claim 5, wherein the carburizing, quenching, and tempering are performed twice.
